(19) Europäisches Patentamt / European Patent Office / Office européen des brevets

(11) EP 2 514 784 B1

(12) **EUROPEAN PATENT SPECIFICATION**

(45) Date of publication and mention of the grant of the patent:
**23.07.2014 Bulletin 2014/30**

(21) Application number: **10837611.2**

(22) Date of filing: **14.12.2010**

(51) Int Cl.:
***C08G 77/452*** *(2006.01)* ***C08G 81/00*** *(2006.01)*

(86) International application number:
**PCT/JP2010/072501**

(87) International publication number:
**WO 2011/074585 (23.06.2011 Gazette 2011/25)**

(54) **PROCESS FOR PRODUCTION OF ORGANOPOLYSILOXANE COMPOUND**

VERFAHREN ZUR HERSTELLUNG EINER ORGANOPOLYSILOXANVERBINDUNG

PROCÉDÉ POUR LA PRODUCTION D’UN COMPOSÉ D’ORGANOPOLYSILOXANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2009 JP 2009285635**

(43) Date of publication of application:
**24.10.2012 Bulletin 2012/43**

(73) Proprietor: **Kao Corporation**
**Chuo-Ku**
**Tokyo 103-8210 (JP)**

(72) Inventors:
- **KODATE, Takashi**
**Wakayama-shi**
**Wakayama 640-8580 (JP)**
- **RINDO, Katsuhiko**
**Wakayama-shi**
**Wakayama 640-8580 (JP)**
- **TAKIGUCHI, Osamu**
**Tokyo 131-8501 (JP)**

(74) Representative: **HOFFMANN EITLE**
**Patent- und Rechtsanwälte**
**Arabellastrasse 4**
**81925 München (DE)**

(56) References cited:
**EP-A1- 0 863 172**
**WO-A2-2009/014237**
**JP-A- 10 306 163**
**JP-A- 2009 024 114**
**JP-A- 2009 256 367**
**US-A- 5 747 016**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 514 784 B1

## Description

TECHNICAL FIELD

The present invention relates to a method of producing organopolysiloxane compounds.

BACKGROUND ART

Organopolysiloxane compounds (hereinafter also referred to as "silicone compounds") have various characteristics, such as low surface tension, good lubricating properties and mold releasability, high heat stability, glass transition point generally extremely low, and good gas permeability. With these characteristics, various forms of silicone compounds have been used in an extremely wide range of applications, for example, as lubricants, heat media, electrical insulators, leveling agents for paints, mold release agents, cosmetic additives, fiber treating agents, shock absorbers, sealing materials, templating agents, glazing agents, foam stabilizers, and defoaming agents.

Also in the field of personal care, silicone compounds have been widely used, for example, to improve the texture of cosmetics, such as skin care products, foundations, shampoos, and conditioners. Silicone compounds have been also used as a base material of hair setting agents. Many customers desire personal care products having good texture with little sticky nature in a solid state. In addition, silicone compounds are required to be soluble in ethanol in view of easiness of blending. For example, Patent Document 1 discloses a silicone compound which is soluble or dispersible in various solvents, such as ethanol.

Although the silicone compound disclosed in Patent Document 1 is more soluble in various solvent than ever known products, silicone compounds having good qualities, particularly, having good texture and solubility in ethanol cannot be stably produced in some cases.

In contrast, in many cases, the base material for cosmetics is required to have good texture with little sticky nature in a solid state and dissolves in ethanol uniformly.

PRIOR ART DOCUMENT

PATENT DOCUMENT

Patent Document 1: JP 2-276824A

Documents JP 2009024114, EP 0863172 and US 5747016 disclose methods which are similar to the present method, differing only in that the amino-modified polyorganosiloxane is not dehydrated. As a consequence the amount of residual water is higher than the claimed range.

SUMMARY OF THE INVENTION

PROBLEMS TO BE SOLVED BY THE INVENTION

An object of the invention is to provide a method of producing an organopolysiloxane compound in stable quality, which has good texture with little sticky nature and dissolves in ethanol uniformly.

MEANS FOR SOLVING THE PROBLEMS

Namely, the present invention provides a method of producing an organopolysiloxane compound in which a poly(N-acylalkyleneimine) segment comprising repeating units represented by formula (1):

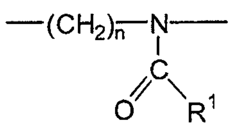

(1)

wherein $R^1$ is a hydrogen atom, an alkyl group having 1 to 22 carbon atoms, an aralkyl group, or an aryl group, and n is 2or 3, is bonded to a terminal end and/or a side chain of an organopolysiloxane segment, the method comprising:

a step (a) of subjecting a cyclic imino ether compound represented by formula (I):

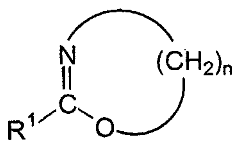 (I)

wherein $R^1$ and n are the same as defined above with respect to $R^1$ and n of formula (1),
to ring opening polymerization in a solution thereof which is obtained by mixing the cyclic imino ether compound and a solvent, thereby preparing a solution of a terminal reactive poly(N-acylalkyleneimine);
a step (b) of dehydrating a solution which is obtained by mixing a modified organopolysiloxane having an amino group at a terminal end and/or a side chain of its molecular chain and a solvent, such that a water concentration of a mixed solution to be obtained by mixing the solution of the terminal reactive poly(N-acylalkyleneimine) obtained in step (a) and the resultant solution of the modified organopolysiloxane is regulated to be 150 mg/kg or less; and
a step (c) of mixing the solution of the modified organopolysiloxane obtained in step (b) and the solution of the terminal reactive poly(N-acylalkyleneimine) obtained in step (a) and allowing the modified organopolysiloxane and the terminal reactive poly(N-acylalkyleneimine) to react.

EFFECT OF THE INVENTION

According to the method of the invention, an organopolysiloxane compound which has good texture with little sticky nature and dissolves in ethanol uniformly is produced in stable quality.

MODE FOR CARRYING OUT THE INVENTION

Organopolysiloxane compound

In the organopolysiloxane compound produced by the method of the invention, a poly(N-acylalkyleneimine) segment comprising the repeating units represented by formula (1) is bonded to a terminal end and/or a side chain of the organopolysiloxane segment.

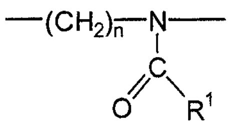 (1)

In formula (1), $R^1$ is a hydrogen atom, an alkyl group having 1 to 22 carbon atoms, an aralkyl group, or an aryl group, and n is 2or 3.

An organopolysiloxane compound which comprises the modified organopolysiloxane segment represented by the following formula (2) and the poly(N-acylalkyleneimine) segment comprising the repeating units represented by formula (1) is preferred, although not particularly limited thereto.

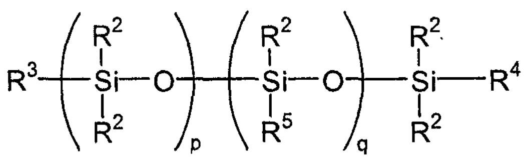 (2)

In the above formula, each of $R^2$ is independently an alkyl group having 1 to 22 carbon atoms or a phenyl group; each of $R^3$ and $R^4$ is independently an alkyl group having 1 to 22 carbon atoms, a phenyl group, or a bivalent linker represented by any of the following formulae (i) to (vi), $R^5$ is a bivalent linker represented by any of the following formulae (i) to (vi), p is an integer of 2 to 4000, and q is an integer of 2 to 250.

$$*-(CH_2)_3-\underset{X^-}{N^+H_2}-** \quad (i) \qquad *-(CH_2)_3-NH-(CH_2)_2-\underset{X^-}{N^+H_2}-** \quad (ii)$$

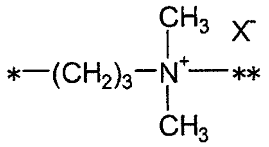 (iii)

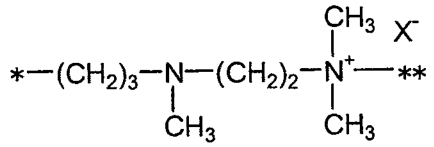 (iv)

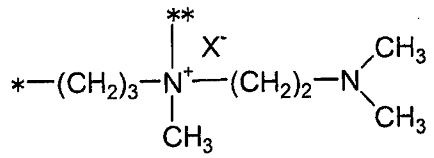 (v)

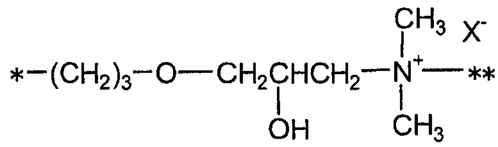 (vi)

In formulae (i) to (vi), * is a site to be bonded to the silicon atom of formula (2), ** is a site to be bonded to the poly(N-acylalkyleneimine) segment comprising the repeating units represented by formula (1), and $X^-$ is a counter ion of the quaternary ammonium salt.

The alkyl group having 1 to 22 carbon atoms for $R^1$ in formula (1) is preferably a linear, branched, or cyclic alkyl group having 1 to 22 carbon atoms, more preferably an alkyl group having 1 to 10 carbon atoms, and still more preferably an alkyl group having 1 to 6 carbon atoms. Specific examples thereof include methyl group, ethyl group, n-propyl group, isopropyl group, n-butyl group, tert-butyl group, pentyl group, hexyl group, cyclohexyl group, heptyl group, octyl group, nonyl group, decyl group, undecyl group, dodecyl group, octadecyl group, nonadecyl group, eicosyl group, and docosyl group.

The aralkyl group for $R^1$ is preferably an aralkyl group having 7 to 15 carbon atoms, more preferably an aralkyl group having 7 to 14 carbon atoms, and still more preferably an aralkyl group having 7 to 10 carbon atoms. Specific examples thereof include benzyl group, phenethyl group, trityl group, naphthylmethyl group, and anthracenylmethyl group.

The aryl group for $R^1$ is preferably an aryl group having 6 to 14 carbon atoms, more preferably an aryl group having 6 to 12 carbon atoms, and still more preferably an aryl group having 6 to 9 carbon atoms. Specific examples thereof include phenyl group, tolyl group, xylyl group, naphthyl group, biphenyl group, anthryl group, and phenanthryl group.

Of the above, $R^1$ is preferably a linear or branched alkyl group having 1 to 6 carbon atoms, more preferably a linear or branched alkyl group having 1 to 3 carbon atoms, and particularly preferably ethyl group.

In formula (1), n is preferably 2.

The alkyl group having 1 to 22 carbon atoms for $R^2$ to $R^4$ in formula (2) and preferred examples thereof are the same as those defined above with respect to the alkyl group having 1 to 22 carbon atoms for $R^1$.

$R^2$ is preferably a linear or branched alkyl group having 1 to 6 carbon atoms, more preferably a linear or branched alkyl group having 1 to 3 carbon atoms, and particularly preferably methyl group. Also, the alkyl group having 1 to 22 carbon atoms for each of $R^3$ and $R^4$ is preferably a linear or branched alkyl group having 1 to 6 carbon atoms, more preferably a linear or branched alkyl group having 1 to 3 carbon atoms, and particularly preferably methyl group.

The bivalent linker for $R^3$ to $R^5$ of formula (2) represented by any of formulae (i) to (vi) is a nitrogen-containing alkylene group and acts as a linker for connecting the modified organopolysiloxane segment and the poly(N-acylalkyleneimine) segment. Of the above linkers represented by formulae (i) to (vi), preferred are those represented by formula (i) or (ii).

In formulae (i) to (vi), X- is a counter ion of the ammonium. Examples thereof include ethylsulfate ion, methylsulfate ion, chloride ion, iodide ion, sulfate ion, p-toluenesulfonate ion, and perchlorate ion.

In formula (2), p is an integer of 2 to 4000, preferably an integer of 135 to 1600, more preferably an integer of 400 to 1350, and still more preferably an integer of 800 to 1350, and q is an integer of 2 to 150, preferably an integer of 3 to 50, more preferably an integer of 5 to 25, more preferably an integer of 5 to 20, and still more preferably an integer of 5 to 10.

The molecular weight (MWox) of the poly(N-acylalkyleneimine) segment in the organopolysiloxane compound can be determined by the calculation from the molecular weight and the degree of polymerization of the N-acylalkyleneimine units or gel permeation chromatography (GPC). In the present invention, the molecular weight is expressed by a number average molecular weight measured by GPC and it is preferably 150 to 50,000, more preferably 500 to 10,000, still more preferably 1,000 to 5,000, and further preferably 2,000 to 3,000. The weight average molecular weight of the poly(N-acylalkyleneimine) segment is preferably 180 to 65,000, more preferably 600 to 13,000, and still more preferably 1,200 to 6,500, and further preferably 2,400 to 3,900.

The weight average molecular weight (MWsi) of the organopolysiloxane segment constituting the main chain of the organopolysiloxane compound is preferably 300 to 300,000. In view of the solubility in ethanol, MWsi is more preferably 10,000 to 120,000 and still more preferably 30,000 to 100,000. Since MWsi has the skeleton common to the

starting modified organopolysiloxane, M Wsi is nearly the same as the weight average molecular weight of the modified organopolysiloxane. The weight average molecular weight of the modified organopolysiloxane is determined by GPC after acetylating the active hydrogen atoms with acetic anhydride.

In view of the solubility in ethanol, the weight average molecular weight (MWt) of the organopolysiloxane compound produced by the production method of the invention is preferably 500 to 500,000, more preferably 30,000 to 150,000, and still more preferably 50,000 to 120,000. MWt referred to herein can be calculated from MWsi and the mass ratio of the organopolysiloxane segment which is determined by nuclear magnetic resonance ($^1$H-NMR) spectroscopy. The mass ratio (r) of the organopolysiloxane segment referred to herein is the ratio of the mass (Msi) of the organopolysiloxane segment to the mass (Msiox) of the organopolysiloxane compound produced by the production method of the invention, and defined by the following formula:

$$r = Msi/Msiox = Msi/(Msi + Mox)$$

wherein Msi and Msiox are as defined above and Mox is the mass of the poly(N-acylalkyleneimine) segment.

The mass ratio (r) of the organopolysiloxane segment is determined from ratio of the integral of the alkyl group or phenyl group in the organopolysiloxane segment to the integral of the methylene group in the poly(N-acylalkyleneimine) segment, each integral being obtained from a nuclear magnetic resonance ($^1$H-NMR) spectrum of a 5% by mass solution of the organopolysiloxane compound in heavy chloroform.

In view of the texture of a cosmetic containing the organopolysiloxane compound, the ratio (r) of the organopolysiloxane segment is preferably 0.1 to 0.95, more preferably 0.3 to 0.9, and still more preferably 0.6 to 0.9.

The specific examples of the organopolysiloxane compound of the invention are described in JP 2-276824A (Patent Document 1) and JP 2009-24114A.

Production method of organopolysiloxane compound

The organopolysiloxane compound of the invention is produced by the reaction of the modified organopolysiloxane having an amino group at a terminal end and/or a side chain of its molecular chain and the terminal reactive poly(N-acylalkyleneimine).

The method of the invention includes the following steps (a) to (c):

a step (a) of subjecting a cyclic imino ether compound represented by formula (I):

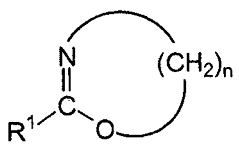

(I)

wherein $R^1$ is a hydrogen atom, an alkyl group having 1 to 22 carbon atoms, an aralkyl group, or an aryl group and n is 2 or 3,
to ring opening polymerization in a solution thereof which is obtained by mixing the cyclic imino ether compound and a solvent, thereby preparing a solution of a terminal reactive poly(N-acylalkyleneimine);
a step (b) of dehydrating a solution which is obtained by mixing a modified organopolysiloxane having an amino group at a terminal end and/or a side chain of its molecular chain and a solvent, such that a water concentration of a mixed solution to be obtained by mixing the solution of the terminal reactive poly(N-acylalkyleneimine) obtained in step (a) and the resultant solution of the modified organopolysiloxane is regulated to be 150 mg/kg or less; and
a step (c) of mixing the solution of the modified organopolysiloxane obtained in step (b) and the solution of the terminal reactive poly(N-acylalkyleneimine) obtained in step (a) and allowing the modified organopolysiloxane and the terminal reactive poly(N-acylalkyleneimine) to react.

Step (a)

In step (a), the cyclic imino ether compound represented by formula (I) is subjected to ring opening polymerization (living polymerization) in a solution which is obtained by mixing the cyclic imino ether compound and a solvent, thereby preparing the solution of the terminal reactive poly(N-acylalkyleneimine).

$R^1$ and n in formula (I) and their preferred examples are the same as those defined above with respect to $R^1$ and n of formula (1).

Ring opening polymerization of cyclic imino ether compound

The solvent for use in the ring opening polymerization of the cyclic imino ether compound is preferably an aprotic polar solvent. Examples thereof include (C1 to 3) alkyl acetates, such as ethyl acetate and propyl acetate; (C1 to 3) dialkyl ethers, such as diethyl ether and diisopropyl ether; cyclic ethers, such as dioxane and tetrahydrofuran; ketones, such as acetone and methyl ethyl ketone; halogen solvents, such as chloroform and methylene chloride; nitrile solvents, such as acetonitrile and benzonitrile; N,N-dimethylformamide; N,N-dimethylacetamide; and dimethyl sulfoxide, with the (C1 to 3) alkyl acetates being preferably used.

In view of controlling the molecular weight of the terminal reactive poly(N-acylalkyleneimine) to be obtained by the ring opening polymerization, the water concentration in the solution which is obtained by mixing the cyclic imino ether compound and a solvent is preferably regulated by a dehydrating dry treatment. In view of controlling the molecular weight of the polymer to be obtained, the water concentration is preferably 600 mg/kg or less, more preferably 200mg or less, and still more preferably 100 mg/kg or less. In view of the efficiency of operation, the water concentration is preferably 10 mg/kg or more, more preferably 30 mg/kg or more, still more preferably 50 mg/kg or more, and particularly preferably 70 mg/kg or more.

The dehydrating dry treatment is preferably conducted under reduced pressure or by using a dehydrating agent. In view of reducing the load to the apparatus, the water is preferably removed by a dehydrating agent. Examples of the dehydrating agent include molecular sieve, alumina, calcium chloride, and calcium sulfate, with molecular sieve being preferred in view of the water concentration to be achieved and production costs.

In view of reducing the dehydrating time, the dehydrating temperature is preferably 50 °C or lower, more preferably 40 °C or lower, and still more preferably 35 °C or lower. In view of the efficiency of operation, the dehydrating temperature is preferably 5 °C or higher.

The dehydrating agent may be directly added to the cyclic imino ether compound solution and removed from the solution after stirring. In view of easiness of operation, the dehydrating dry treatment is preferably conducted by passing the cyclic imino ether compound solution through a column packed with the dehydrating agent. In view of reducing the dehydrating time, the concentration of the cyclic imino ether compound in its solution is preferably 10 to 80% by mass, more preferably 20 to 60% by mass, and still more preferably 25 to 55% by mass.

The ring opening polymerization of the cyclic imino ether compound may be carried out in the presence of an initiator. A highly electrophilic compound is used as the initiator. Examples thereof include alkyl esters of strong acid, such as alkyl benzenesulfonates, alkyl p-toluenesulfonates, alkyl trifluoromethanesulfonates, alkyl trofluroacetates, and dialkyl sulfates, with dialkyl sulfates, particularly, dialkyl sulfates having an alkyl group having 1 to 3 carbon atoms being preferably used. The amount of the initiator is generally one mole per 2 to 100 mol of the cyclic imino ether compound.

The polymerization temperature is preferably 40 to 150 °C, more preferably 60 to 120 °C, still more preferably 70 to 110 °C, and further preferably 75 to 100 °C. In view of controlling the molecular weight of the polymer to be obtained, the polymerization temperature is preferably regulated within the above ranges after adding the initiator.

The polymerization time varies depending upon the reaction conditions, such as the polymerization temperature, and is generally 1 to 60 h, preferably 2 to 50 h, more preferably 3 to 30 h, and still more preferably 5 to 15 h.

When the cyclic imino ether compound represented by formula (I) is 2-substituted-2-oxazoline, poly(N-acylethyleneimine) wherein n in formula (1) is 2 is obtained. When 2-substituted-dihydro-2-oxazine is used, poly(N-acylpropyleneimin) wherein n in formula (1) is 3 is obtained.

The number average molecular weight of the terminal reactive poly(N-acylalkyleneimine) obtained by the ring opening polymerization is preferably 150 to 50000, more preferably 500 to 10000, still more preferably 1000 to 5000, and particularly preferably 2000 to 3000. In view of improving the texture of the organopolysiloxane compound to be obtained and its solubility in ethanol, the number average molecular weight is preferably 150 or more, and preferably 50000 or less in view of the texture of the organopolysiloxane compound to be obtained and easiness of production.

Step (b)

In step (b), the solution obtained by mixing the modified organopolysiloxane having an amino group at a terminal end and/or a side chain of its molecular chain and a solvent is dehydrated or dried, such that the water concentration in a mixed solution which is to be obtained by mixing the solution of the terminal reactive poly(N-acylalkyleneimine) obtained in step (a) with the resultant solution of the modified organopolysiloxane will be regulated to be 150 mg/kg or less.

The modified organopolysiloxane having an amino group at a terminal end and/or a side chain of its molecular chain is not particularly limited and preferably a modified organopolysiloxane represented by formula (II):

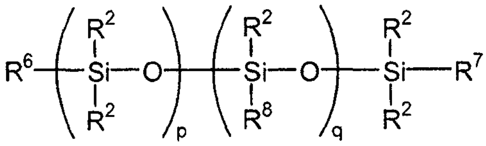

(II)

wherein each of $R^2$ is independently an alkyl group having 1 to 22 carbon atoms or a phenyl group; each of $R^6$ and $R^7$ is independently an alkyl group having 1 to 22 carbon atoms, a phenyl group, or a group represented by any of the following formulae (vii) to (xi), $R^8$ is a group represented by any of the following formulae (vii) to (xi), p is an integer of 2 to 4000, and q is an integer of 2 to 150.

$-(CH_2)_3-NH_2$ (vii) $-(CH_2)_3-NH-(CH_2)_2-NH_2$ (viii)

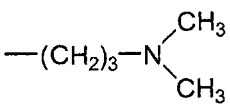

(ix)

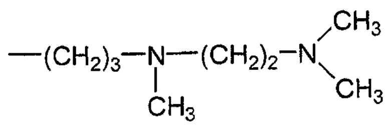

(x)

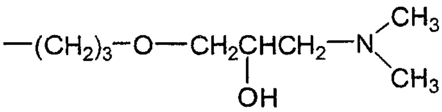

(xi)

In formula (II), the alkyl group having 1 to 22 carbon atoms or phenyl group represented by $R^2$, $R^6$ and $R^7$ and preferred examples thereof are the same as those defined above with respect to the alkyl group having 1 to 22 carbon atoms or phenyl group for $R^2$ to $R^4$ of formula (2), and p and q and their preferred ranges are the same as those defined above with respect to p and q of formula (2).

Of the groups represented by any of formulae (vii) to (xi), preferred is a group represented by formula (vii) or (viii).

The modified organopolysiloxane is produced by any of known methods and is commercially available, for example, under tradenames KF-8015, KF-864, and KF-8003 of Shin-Etsu Silicone Co., Ltd. and BY16-898 of Toray Dow Corning Co., Ltd.

The solvent for use in step (b) is preferably an aprotic polar solvent. Examples thereof include (C1 to 3) alkyl acetates, such as ethyl acetate and propyl acetate; (C1 to 3) dialkyl ethers, such as diethyl ether and diisopropyl ether; cyclic ethers, such as dioxane and tetrahydrofuran; ketones, such as acetone and methyl ethyl ketone; halogen solvents, such as chloroform and methylene chloride; nitrile solvents, such as acetonitrile and benzonitrile; N,N-dimethylformamide; N,N-dimethylacetamide; and dimethyl sulfoxide, with the (C1 to 3) alkyl acetates being preferably used. In view of the separation of the solution and production costs, the solvent is preferably the same as that used in step (a).

In view of efficiently conducting the dehydrating dry treatment, the concentration of the modified organopolysiloxane in the solution is preferably 10 to 70% by mass, more preferably 20 to 60% by mass, and still more preferably 30 to 50% by mass.

By controlling the water concentration of the solution of the modified organopolysiloxane such that the water concentration of the mixed solution to be obtained by mixing the solution of the terminal reactive poly(N-acylalkyleneimine) obtained in step (a) and the resultant solution of the modified organopolysiloxane is regulated to be 150 mg/kg or less, an organopolysiloxane compound which has good texture with little sticky nature and dissolves in ethanol uniformly is produced in stable quality.

The water concentration of the modified organopolysiloxane solution is controlled by the dehydrating dry treatment. The water concentration thereof varies depending upon the water concentration of the terminal reactive poly(N-acylalkyleneimine) solution to be mixed and is preferably 100 mg/kg or less, more preferably 90 mg/kg or less, and still more preferably 60 mg/kg or less. In view of the efficiency of operation, the water concentration is preferably 3 mg/kg or more, more preferably 5 mg/kg or more, and still more preferably 10 mg/kg or more.

By controlling the water concentration of the modified organopolysiloxane solution within the above ranges, the water concentration of a mixed solution of the terminal reactive poly(N-acylalkyleneimine) solution obtained in step (a) and the modified organopolysiloxane solution is regulated to be 150 mg/kg or less.

The water concentration of the modified organopolysiloxane solution may be controlled by the same manner as in the method of dehydrating the cyclic imino ether compound solution in step (a). Specifically, the dehydrating dry treatment is conducted by using a dehydrating agent in view of reducing the load to the apparatus. In view of the water

concentration to be achieved and production costs, molecular sieves are preferably used as the dehydrating agent. The dehydrating temperature is preferably 40 °C or lower in view of reducing the dehydrating time, and preferably 5 °C or higher in view of the efficiency of operation. The dehydrating agent may be directly added to the modified organopolysiloxane solution and removed from the solution after stirring. In view of easiness of operation, the dehydrating dry treatment is preferably conducted by passing the modified organopolysiloxane solution through a column packed with the dehydrating agent.

In a preferred embodiment, in view of controlling the molecular weight of the polymer to be obtained, the terminal reactive poly(N-acylalkyleneimine) solution is preferably cooled before the next step (c) preferably to 70 °C or lower, more preferably to 10 to 65 °C, still more preferably to 20 °C to 60 °C, and particularly preferably to 25 to 40 °C.

Step (c)

In step (c), the modified organopolysiloxane solution obtained in step (b) and the terminal reactive poly(N-acylalkyleneimine) solution obtained in step (a) are mixed and allowed to react.

Connecting reaction

The reaction temperature of the terminal reactive poly(N-acylalkyleneimine) solution and the modified organopolysiloxane solution is preferably 40 to 150 °C, more preferably 60 to 120 °C, still more preferably 70 to 110 °C, and further preferably 75 to 100 °C. In view of controlling the molecular weight of the reaction product to be obtained, the reaction temperature is preferably regulated within the above ranges after mixing the terminal reactive poly(N-acylalkyleneimine) solution and the modified organopolysiloxane solution.

The reaction time varies depending upon the reaction conditions, such as the polymerization temperature, and is generally 1 to 60 h, preferably 3 to 30 h, and more preferably 5 to 15 h.

The water concentration of the mixed reaction solution which is obtained after mixing the terminal reactive poly(N-acylalkyleneimine) solution and the modified organopolysiloxane solution and allowing them to react is controlled to be 150 mg/kg or less, preferably 120 mg/kg or less, more preferably 100 mg/kg or less, and still more preferably 80 mg/kg or less by the dehydrating dry treatment of the modified organopolysiloxane solution in step (b). In view of the texture of the organopolysiloxane compound to be obtained by the method of the invention, the lower limit of the water concentration may be 0 mg/kg or more, but preferably 5 mg/kg or more, more preferably 10 mg/kg or more, and particularly preferably 30 mg/kg or more in view of efficiently conducting the operations of steps (a) and (b).

Removal of solvent

In the present invention, the solvent is preferably removed from the reaction solution obtained, if necessary. The solvent is removed from the reaction solution preferably at 100 to 200 °C and more preferably at 120 to 170 °C.

In a preferred embodiment, in view of production efficiency, the solvent may be removed by using a twin-screw solvent removing machine described in JP 10-279690A. This solvent removing machine utilizes the space from the bottom of tank to the uppermost end of the twin-screw as the effective volume. On the upper portion of the effective volume, an evaporation chamber which is a space uniformly extending from the inlet of the raw material to the outlet of the dried product is disposed. On the ceiling of the evaporation chamber, a vent connecting to a vacuum line is disposed.

In view of preventing the discoloration of the modified organopolysiloxane to be obtained, the removal of the solvent is preferably conducted in nitrogen atmosphere.

The organopolysiloxane compound obtained by the method of the invention has good texture with little sticking nature. The degree of sticking is evaluated by the tackiness. The tackiness is measured, for example, by a tack tester. In view of good texture with little sticking nature, the tackiness at 25 °C is preferably 70 gf or less.

The organopolysiloxane compound obtained by the method of the invention is soluble in ethanol. The solubility in ethanol can be evaluated by the transmittance of a solution of the organopolysiloxane compound in ethanol. The transmittance can be measured by a UV-visible spectrometer. The transmittance is preferably 60 to 100% when measured under the conditions employed in "Measurement of transmittance" described below.

EXAMPLES

Measurement of molecular weight

In the following examples and comparative example, the mass ratio of the organopolysiloxane segment is a value determined by nuclear magnetic resonance ($^1$H-NMR) spectroscopy and the weight average molecular weight of the final product is a calculated value. The number average molecular weight and the weight average molecular weight

of poly(N-propionylethyleneimine) were determined by gel permeation chromatography (GPC) under the following conditions.

Measuring conditions

Column: two K-804L (tradename, manufactured by Showa Denko K.K.) connected in series.
Eluting solution: 1 mmol/L Farmin DM20 (tradename, manufactured by Kao Corporation)/chloroform
Flow rate: 1.0 mL/min
Column temperature: 40 °C
Detector: differential refractometer
Sample: 5 mg/mL, 100 μL
Polystyrene calibration

The molecular weight of the organopolysiloxane segment is nearly the same as the weight average molecular weight of a primary aminopropyl side chain-modified organopolysiloxane. After acetylating the primary aminopropyl side chain-modified organopolysiloxane in the manner described below, the weight average molecular weight of the primary aminopropyl side chain-modified organopolysiloxane was determined by GPC under the same conditions as in the measurement of the weight average molecular weight of the poly(N-propionylethyleneimine).

Acetylation of primary aminopropyl side chain-modified organopolysiloxane

Into a round flask equipped with a condenser, 90 g of chloroform and 10 g of primary aminopropyl side chain-modified polydimethylsiloxane were added and dissolved uniformly. Then, acetic anhydride was added in an amount equivalent to the amino groups of the primary aminopropyl side chain-modified polydimethylsiloxane and the acetylation of the amino groups was allowed to proceed for 8 h under reflux while stirring. After leaving the solution to stand for cooling, the solvent was removed under reduced pressure, to prepare a sample for measuring the molecular weight.

Measurement of water concentration

The water concentration of the solution was measured by using the following apparatus. The water concentrations of the cyclic imino ether compound solution and the modified organopolysiloxane solution are actually determined values. The water concentrations of the reaction mixture solution of the modified organopolysiloxane solution and the terminal reactive poly(N-acylalkyleneimine) solution is a value calculated from the charged amounts.

Apparatus: Karl Fischer Moisture Meter (tradename: CA-06, manufactured by Mitsubishi Chemical Corporation)
Catholyte: Aquamicron CK (tradename, manufactured by Mitsubishi Chemical Corporation)
Anolyte: Aquamicron AU (tradename, manufactured by Mitsubishi Chemical Corporation):Aquamicron CM (tradename, manufactured by Mitsubishi Chemical Corporation) = 20:80 (by volume %)

Measurement of transmittance

The solubility in ethanol was evaluated by transmittance. The measuring conditions are as follows.

Apparatus: UV-visible spectrometer (tradename: UV-2550, manufactured by Shimadzu Corporation)
Cell: quartz cell
Optical path length: 10 mm
Wave length: 650 nm
Sample: 2 mass % ethanol solution

Measurement of tackiness

The degree of sticking nature was evaluated by tackiness. The measuring conditions are as follows.

Apparatus: tack tester (tradename: LT25A-500, manufactured by Rhesca Corporation)
Penetrator: SUS circular penetrator with 5 mm diameter
Penetrating speed: 120 mm/min

Preload: 200 gf (1.96 N)
Press Time: 1.0 s
Pulling up speed: 600 mm/min
Sample thickness: 5 mm
Measuring temperature: 25 °C

EXAMPLE 1

A solution obtained by mixing 12.9 g (0.13 mol) of 2-ethyl-2-oxazoline and 27.7 g of ethyl acetate was dehydrated at 28 °C for 15 h by using 2.0 g of molecular sieve (tradename: Zeorum A-4, manufactured by Tosoh Corporation). The water concentration of the dehydrated solution was 94 mg/kg.

Separately, a solution obtained by mixing 100 g of a primary aminopropyl side chain-modified polydimethylsiloxane (tradename: KF-8015, manufactured by Shin-Etsu Silicone Co., Ltd., weight average molecular weight: 100000, amine equivalent: 20000) and 203 g of ethyl acetate was dehydrated at 28 °C for 15 h by using 15.2 g of the molecular sieve. The water concentration of the dehydrated solution was 89 mg/kg.

After adding 0.77 g (0.005 mol) of diethyl sulfate to the dehydrated solution of 2-ethyl-2-oxazoline in ethyl acetate, the mixture was refluxed in nitrogen atmosphere for 8 h at 80 °C under heating, thereby synthesizing a terminal reactive poly(N-propionylethyleneimine). The number average molecular weight was 2700 and the weight average molecular weight was 3400 when measured by GPC.

The terminal reactive poly(N-propionylethyleneimine) solution was cooled to 30 °C and added with the dehydrated primary aminopropyl side chain-modified polydimethylsiloxane solution in one portion. The mixture was refluxed for 10 h at 80 °C under heating. The water concentration of the reaction mixture solution of the primary aminopropyl side chain-modified polydimethylsiloxane solution and the terminal reactive poly(N-propionylethyleneimine) solution was 90 mg/kg.

The reaction mixture was concentrated under reduced pressure, to obtain a N-propionylethyleneimine-dimethylsiloxane copolymer as a white rubbery solid (108 g, 95% yield). The mass ratio of the organopolysiloxane segment in the final product was 0.87 and the weight average molecular weight of the final product was 115000.

EXAMPLE 2

A solution obtained by mixing 12.9 g (0.13 mol) of 2-ethyl-2-oxazoline and 27.7 g of ethyl acetate was dehydrated at 28 °C for 0.5 h by using 2.0 g of molecular sieve (tradename: Zeorum A-4, manufactured by Tosoh Corporation). The water concentration of the dehydrated solution was 200 mg/kg.

Separately, a solution obtained by mixing 100 g of a primary aminopropyl side chain-modified polydimethylsiloxane (tradename: KF-8015, manufactured by Shin-Etsu Silicone Co., Ltd., weight average molecular weight: 100000, amine equivalent: 20000) and 203 g of ethyl acetate was dehydrated at 28 °C for 15 h by using 15.2 g of the molecular sieve. The water concentration of the dehydrated solution was 19 mg/kg.

After adding 0.77 g (0.005 mol) of diethyl sulfate to the dehydrated solution of 2-ethyl-2-oxazoline in ethyl acetate, the mixture was refluxed in nitrogen atmosphere for 8 h at 80 °C under heating, thereby synthesizing a terminal reactive poly(N-propionylethyleneimine). The number average molecular weight was 2800 and the weight average molecular weight was 3500 when measured by GPC.

The terminal reactive poly(N-propionylethyleneimine) solution was cooled to 30 °C and added with the dehydrated primary aminopropyl side chain-modified polydimethylsiloxane solution in one portion. The mixture was refluxed for 10 h at 80 °C under heating. The water concentration of the reaction mixture solution of the primary aminopropyl side chain-modified polydimethylsiloxane solution and the terminal reactive poly(N-propionylethyleneimine) solution was 41 mg/kg.

The reaction mixture was concentrated under reduced pressure, to obtain a N-propionylethyleneimine-dimethylsiloxane copolymer as a white rubbery solid (106 g, 93% yield). The mass ratio of the organopolysiloxane segment in the final product was 0.87 and the weight average molecular weight of the final product was 112000.

EXAMPLE 3

A solution obtained by mixing 12.9 g (0.13 mol) of 2-ethyl-2-oxazoline and 27.7 g of ethyl acetate was dehydrated at 28 °C for 0.5 h by using 1.0 g of molecular sieve (tradename: Zeorum A-4, manufactured by Tosoh Corporation). The water concentration of the dehydrated solution was 308 mg/kg.

Separately, a solution obtained by mixing 100 g of a primary aminopropyl side chain-modified polydimethylsiloxane (tradename: KF-8015, manufactured by Shin-Etsu Silicone Co., Ltd., weight average molecular weight: 100000, amine equivalent: 20000) and 203 g of ethyl acetate was dehydrated at 28 °C for 15 h by using 15.2 g of the molecular

sieve. The water concentration of the dehydrated solution was 42 mg/kg.

After adding 0.77 g (0.005 mol) of diethyl sulfate to the dehydrated solution of 2-ethyl-2-oxazoline in ethyl acetate, the mixture was refluxed in nitrogen atmosphere for 8 h at 80 °C under heating, thereby synthesizing a terminal reactive poly(N-propionylethyleneimine). The number average molecular weight was 2600 and the weight average molecular weight was 3200 when measured by GPC.

The terminal reactive poly(N-propionylethyleneimine) solution was cooled to 30 °C and added with the dehydrated primary aminopropyl side chain-modified polydimethylsiloxane solution in one portion. The mixture was refluxed for 10 h at 80 °C under heating. The water concentration of the reaction mixture solution of the primary aminopropyl side chain-modified polydimethylsiloxane solution and the terminal reactive poly(N-propionylethyleneimine) solution was 74 mg/kg.

The reaction mixture was concentrated under reduced pressure, to obtain a N-propionylethyleneimine-dimethylsiloxane copolymer as a white rubbery solid (107 g, 94% yield). The mass ratio of the organopolysiloxane segment in the final product was 0.88 and the weight average molecular weight of the final product was 114000.

EXAMPLE 4

A solution obtained by mixing 12.9 g (0.13 mol) of 2-ethyl-2-oxazoline and 27.7 g of ethyl acetate was dehydrated at 28 °C for 0.5 h by using 0.5 g of molecular sieve (tradename: Zeorum A-4, manufactured by Tosoh Corporation). The water concentration of the dehydrated solution was 597 mg/kg.

Separately, a solution obtained by mixing 100 g of a primary aminopropyl side chain-modified polydimethylsiloxane (tradename: KF-8015, manufactured by Shin-Etsu Silicone Co., Ltd., weight average molecular weight: 100000, amine equivalent: 20000) and 203 g of ethyl acetate was dehydrated at 28 °C for 15 h by using 15.2 g of the molecular sieve. The water concentration of the dehydrated solution was 86 mg/kg.

After adding 0.77 g (0.005 mol) of diethyl sulfate to the dehydrated solution of 2-ethyl-2-oxazoline in ethyl acetate, the mixture was refluxed in nitrogen atmosphere for 8 h at 80 °C under heating, thereby synthesizing a terminal reactive poly(N-propionylethyleneimine). The number average molecular weight was 2300 and the weight average molecular weight was 3000 when measured by GPC.

The terminal reactive poly(N-propionylethyleneimine) solution was cooled to 30 °C and added with the dehydrated primary aminopropyl side chain-modified polydimethylsiloxane solution in one portion. The mixture was refluxed for 10 h at 80 °C under heating. The water concentration of the reaction mixture solution of the primary aminopropyl side chain-modified polydimethylsiloxane solution and the terminal reactive poly(N-propionylethyleneimine) solution was 147 mg/kg.

The reaction mixture was concentrated under reduced pressure, to obtain a N-propionylethyleneimine-dimethylsiloxane copolymer as a white rubbery solid (108 g, 95% yield). The mass ratio of the organopolysiloxane segment in the final product was 0.87 and the weight average molecular weight of the final product was 115000.

COMPARATIVE EXAMPLE 1

A solution obtained by mixing 12.9 g (0.13 mol) of 2-ethyl-2-oxazoline and 27.7 g of ethyl acetate was dehydrated at 28 °C for 15 h by using 2.0 g of molecular sieve (tradename: Zeorum A-4, manufactured by Tosoh Corporation). The water concentration of the dehydrated solution was 54 mg/kg.

Separately, a solution obtained by mixing 100 g of a primary aminopropyl side chain-modified polydimethylsiloxane (tradename: KF-8015, manufactured by Shin-Etsu Silicone Co., Ltd., weight average molecular weight: 100000, amine equivalent: 20000) and 203 g of ethyl acetate was dehydrated at 28 °C for 0.5 h by using 15.2 g of the molecular sieve. The water concentration of the dehydrated solution was 232 mg/kg.

After adding 0.77 g (0.005 mol) of diethyl sulfate to the dehydrated solution of 2-ethyl-2-oxazoline in ethyl acetate, the mixture was refluxed in nitrogen atmosphere for 8 h at 80 °C under heating, thereby synthesizing a terminal reactive poly(N-propionylethyleneimine). The number average molecular weight was 2600 and the weight average molecular weight was 3300 when measured by GPC.

The terminal reactive poly(N-propionylethyleneimine) solution was cooled to 30 °C and added with the dehydrated primary aminopropyl side chain-modified polydimethylsiloxane solution in one portion. The mixture was refluxed for 10 h at 80 °C under heating. The water concentration of the reaction mixture solution of the primary aminopropyl side chain-modified polydimethylsiloxane solution and the terminal reactive poly(N-propionylethyleneimine) solution was 214 mg/kg.

The reaction mixture was concentrated under reduced pressure, to obtain a N-propionylethyleneimine-dimethylsiloxane copolymer as a white rubbery solid (108 g, 95% yield). The mass ratio of the organopolysiloxane segment in the final product was 0.88 and the weight average molecular weight of the final product was 114000.

The water concentration of the modified organopolysiloxane solution, the water concentration of the reaction

mixture solution (shown as "mixed solution" in table) of the modified organopolysiloxane solution and the terminal reactive poly(N-acylalkyleneimine) solution, and the tackiness and transmittance of the obtained organopolysiloxane compound, each measured in Examples 1 to 4 and Comparative Example 1, are shown in Table 1.

Table 1

| | Examples | | | | Comparative Example |
|---|---|---|---|---|---|
| | 1 | 2 | 3 | 4 | 1 |
| Water concentration of the modified organopolysiloxane solution (mg/kg) | 89 | 19 | 42 | 86 | 232 |
| Water concentration of the mixed solution (mg/kg) | 90 | 41 | 74 | 147 | 214 |
| Tackiness (gf) | 49 | 50 | 38 | 47 | 195 |
| Transmittance (%) | 73 | 90 | 98 | 97 | 6 |

As seen from the results shown in Table 1, the organopolysiloxane compound of Comparative Example 1 was sticky because of its high tackiness and had a poor solubility in ethanol as evidenced by a low transmittance when dissolved in ethanol. This is because that the water concentration of the reaction mixture solution of the modified organopolysiloxane solution and the terminal reactive poly(N-acylalkyleneimine) solution exceeded 150 mg/kg. In contrast, the organopolysiloxane compounds of Examples 1 to 4 were all little sticky with a low tackiness and had a high solubility in ethanol.

REFERENCE EXAMPLE 1

Into a 200-ml two-necked flask equipped with a stirring device, 50 g of 2-ethyl-2-oxazoline, 50 g of ethyl acetate, and 5 g of molecular sieve (tradename: Zeorum A-4, manufactured by Tosoh Corporation) were charged. The mixture was dehydrated in nitrogen atmosphere at room temperature (28 °C) under stirring. Samples were taken at predetermined intervals to measure the water concentration.

REFERENCE EXAMPLE 2

The dehydrating treatment and the measurement of the water concentration were conducted in the same manner as in Reference Example 1 except for changing the amount of 2-ethyl-2-oxazoline to 100 g and omitting the addition of ethyl acetate.

REFERENCE EXAMPLE 3

The dehydrating treatment and the measurement of the water concentration were conducted in the same manner as in Reference Example 1 except for changing the dehydrating temperature to 50 °C.

The results of Reference Examples 1 to 3 are shown in Table 2, in which "-" means "not measured."

Table 2

| | Reference Examples | | |
|---|---|---|---|
| | 1 | 2 | 3 |
| Mass ratio of 2-ethyl-2-oxazoline | 50% | 100% | 50% |
| Temperature (°C) | 28 | 28 | 50 |
| Dehydrating time (h) | Water concentration (mg/kg) | | |
| 0 | 2970 | 550 | 2970 |
| 1 | 124 | 240 | 161 |
| 2 | 92 | 174 | 114 |
| 4 | - | 172 | 131 |
| 6 | - | 167 | 104 |

(continued)

| | Reference Examples | | |
|---|---|---|---|
| | 1 | 2 | 3 |
| 24 | - | 181 | - |

REFERENCE EXAMPLE 4

Into a 200-ml two-necked flask equipped with a stirring device, 33 g of a primary aminopropyl side chain-modified polydimethylsiloxane (weight average molecular weight: 30000, amine equivalent: 2000), 66 g of ethyl acetate, and 5 g of molecular sieve were charged. The mixture was dehydrated in nitrogen atmosphere at room temperature (28 °C) under stirring. Samples were taken at predetermined intervals to measure the water concentration.

REFERENCE EXAMPLE 5

The dehydrating treatment and the measurement of the water concentration were conducted in the same manner as in Reference Example 4 except for changing the amount of the primary aminopropyl side chain-modified polydimethylsiloxane to 100 g and omitting the addition of ethyl acetate.

REFERENCE EXAMPLE 6

The dehydrating treatment and the measurement of the water concentration were conducted in the same manner as in Reference Example 4 except for changing the dehydrating temperature to 50 °C.
The results of Reference Examples 4 to 6 are shown in Table 3, in which "-" means "not measured."

Table 3

| | Reference Examples | | |
|---|---|---|---|
| | 4 | 5 | 6 |
| Mass ratio of silicone | 33% | 100% | 33% |
| Temperature (°C) | 28 | 28 | 50 |
| Dehydrating time (h) | Water concentration (mg/kg) | | |
| 0 | 725 | 216 | 725 |
| 1 | 101 | 111 | 176 |
| 2 | 67 | 230 | 168 |
| 4 | - | 89 | 206 |
| 6 | - | - | 149 |
| 24 | - | - | 91 |

The results of Tables 1 and 2 show that:

(i) when the 2-ethyl-2-oxazoline solution and the silicone solution do not contain the ethyl acetate solvent, the water concentration at initial stage is low but the dehydrating time becomes longer, as compared with when containing the solvent, and
(ii) the dehydration is more efficiently done in shorter period of time when the dehydrating temperature is room temperature (28 °C) as compared with as high as 50 °C.

INDUSTRIAL APPLICABILITY

Since the organopolysiloxane compound obtained by the method of the invention has good texture with little sticky nature and dissolves in ethanol uniformly, the organopolysiloxane compound is suitably used as the base material for cosmetics.

## Claims

1. A method of producing an organopolysiloxane compound in which a poly(N-acylalkyleneimine) segment comprising repeating units represented by formula (1):

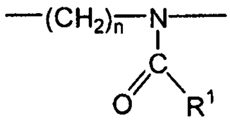

(1)

wherein $R^1$ is a hydrogen atom, an alkyl group having 1 to 22 carbon atoms, an aralkyl group, or an aryl group, and n is 2 or 3,
is bonded to a terminal end and/or a side chain of an organopolysiloxane segment,
the method comprising:

a step (a) of subjecting a cyclic imino ether compound represented by formula (I):

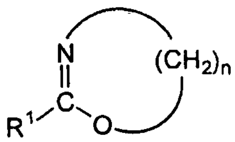

(I)

wherein $R^1$ and n are the same as defined above with respect to $R^1$ and n of formula (1),
to ring opening polymerization in a solution thereof which is obtained by mixing the cyclic imino ether compound and a solvent, thereby preparing a solution of a terminal reactive poly(N-acylalkyleneimine);
a step (b) of dehydrating a solution which is obtained by mixing a modified organopolysiloxane having an amino group at a terminal end and/or a side chain of its molecular chain and a solvent, such that a water concentration of a mixed solution to be obtained by mixing the solution of the terminal reactive poly(N-acylalkyleneimine) obtained in step (a) and the resultant solution of the modified organopolysiloxane is regulated to be 150 mg/kg or less; and
a step (c) of mixing the solution of the modified organopolysiloxane obtained in step (b) and the solution of the terminal reactive poly(N-acylalkyleneimine) obtained in step (a) and allowing the modified organopolysiloxane and the terminal reactive poly(N-acylalkyleneimine) to react.

2. The method according to claim 1, wherein the modified organopolysiloxane is represented by formula (II):

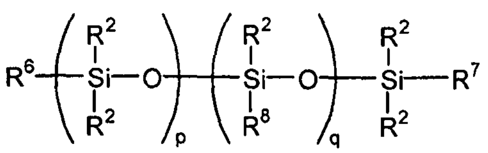

(II)

wherein each of $R^2$ is independently an alkyl group having 1 to 22 carbon atoms or a phenyl group;
each of $R^6$ and $R^7$ is independently an alkyl group having 1 to 22 carbon atoms, a phenyl group, or a group represented by any of the following formulae (vii) to (xi):

$-(CH_2)_3-NH_2$ (vii) $-(CH_2)_3-NH-(CH_2)_2-NH_2$ (viii)

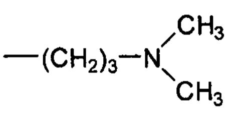

(ix)

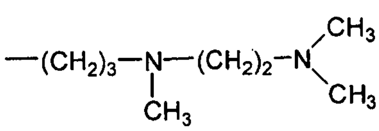

(x)

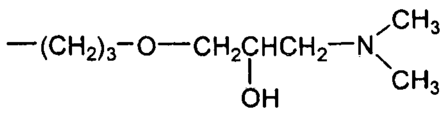 (xi)

;

$R^8$ is a group represented by any of the above formulae (vii) to (xi);
p is an integer of 2 to 4000; and
q is an integer of 2 to 150.

3. The method according to claim 1 or 2, wherein the modified organopolysiloxane solution is dehydrated in step (b) until a water concentration of the modified organopolysiloxane solution is reduced to 100 mg/kg or less.

4. The method according to any one of claims 1 to 3, wherein a concentration of the modified organopolysiloxane in the modified organopolysiloxane solution obtained in step (b) is 10 to 70% by mass.

5. The method according to any one of claims 1 to 4, wherein the modified organopolysiloxane solution is dehydrated in step (b) at 40 °C or lower.

6. The method according to any one of claims 1 to 5, wherein the modified organopolysiloxane solution is dehydrated in step (b) by using molecular sieve.

7. The method according to any one of claims 1 to 6, wherein the terminal reactive poly(N-acylalkyleneimine) solution is cooled to 70 °C or lower before step (c).

8. The method according to any one of claims 1 to 7, wherein the ring opening polymerization is conducted in step (a) after dehydrating the cyclic imino ether compound solution.

9. The method according to any one of claims 1 to 8, wherein the ring opening polymerization is conducted in step (a) after dehydrating the solution of the cyclic imino ether compound to a water concentration of 10 to 600 mg/kg.

10. The method according to any one of claims 1 to 9, wherein the solvent in step (a) is a (C1 to 3) alkyl acetate.

11. The method according to any one of claims 1 to 10, wherein the modified organopolysiloxane solution is dehydrated in step (b) until a water concentration reaches 3 to 100 mg/kg.

12. The method according to any one of claims 1 to 11, wherein the solvent in step (b) is a (C1 to 3) alkyl acetate.

13. The method according to any one of claims 1 to 12, wherein the water concentration of the mixed reaction solution which is obtained in step (c) after mixing the terminal reactive poly(N-acylalkyleneimine) solution and the modified organopolysiloxane solution and allowing the terminal reactive poly(N-acylalkyleneimine) and the modified organopolysiloxane to react is 0 to 150 mg/kg or less.

14. The method according claim 1, wherein each $R^1$ in formulae (1) and (I) is a linear or branched alkyl group having 1 to 3 carbon atoms.

15. The method according to claim 2, wherein $R^2$ in formula (II) is a linear or branched alkyl group having 1 to 3 carbon atoms.

16. The method according to claim 2, wherein each of $R^6$ and $R^7$ in formula (II) is independently a linear or branched alkyl group having 1 to 3 carbon atoms or a group represented by any of the formulae (vii) to (xi).

**Patentansprüche**

1. Verfahren zur Herstellung einer Organopolysiloxanverbindung, in der ein Poly(N-acylalkylenimin)-Segment, das Wiederholungseinheiten der Formel (1) umfasst:

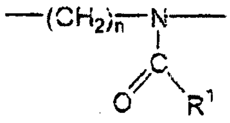

(1)

worin $R^1$ ein Wasserstoffatom, eine Alkylgruppe mit 1 bis 22 Kohlenstoffatomen, eine Aralkylgruppe oder eine Arylgruppe ist, und n 2 oder 3 ist,
mit einem terminalen Ende und/oder einer Seitenkette eines Organopolysiloxansegments verbunden ist,
wobei das Verfahren umfasst:

einen Schritt (a), in dem eine cyclische Iminoetherverbindung der Formel (I)

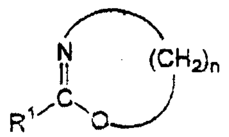

(I)

worin $R^1$ und n die gleichen sind wie oben in Bezug auf $R^1$ und n der Formel (1) definiert,
einer Ringöffnungspolymerisation in einer Lösung davon, die durch Mischen der cyclischen Iminoetherverbindung und einem Lösungsmittel erhalten wird, unterzogen wird, wodurch eine Lösung eines Endgruppen-reaktiven Poly(n-acylalkylenimins) hergestellt wird;
einen Schritt (b) des Dehydratisierens einer Lösung, die durch Mischen eines modifizierten Organopolysiloxans, das eine Aminogruppe an einem endständigen Ende und/oder einer Seitenkette seiner molekularen Kette aufweist, und eines Lösungsmittels erhalten wird, so dass die Wasserkonzentration einer gemischten Lösung, die durch Mischen des in Schritt (a) erhaltenen Endgruppen-reaktiven Poly(N-acylalkylenimins) und der resultierenden Lösung des modifizierten Organopolysiloxans erhalten wird, auf 150 mg/kg oder weniger reguliert wird; und
einen Schritt (c) des Mischens der in Schritt (b) erhaltenen Lösung des modifizierten Organopolysiloxans und der in Schritt (a) erhaltenen Lösung des Endgruppen-reaktiven Poly(N-acylalkylenimins) und des Ermöglichens der Reaktion des modifizierten Organopolysiloxans und des Endgruppen-reaktiven Poly(N-acylalkylenimins).

2. Verfahren gemäß Anspruch 1, worin das modifizierte Organopolysiloxan durch die Formel (II) dargestellt wird:

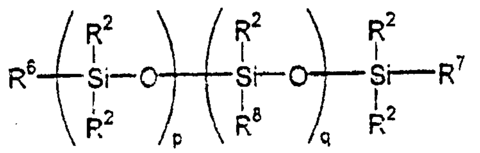

(II)

worin jedes der $R^2$ unabhängig eine Alkylgruppe mit 1 bis 22 Kohlenstoffatomen oder eine Phenylgruppe ist;
jedes der $R^6$ und $R^7$ unabhängig eine Alkylgruppe mit 1 bis 22 Kohlenstoffatomen, eine Phenylgruppe oder eine Gruppe ist, die durch irgendeine der folgenden Formeln (vii) bis (xi) dargestellt wird:

$-(CH_2)_3-NH_2$ (vii) $-(CH_2)_3-NH-(CH_2)_2-NH_2$ (viii)

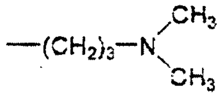

(ix)

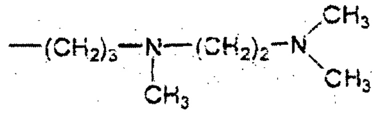

(x)

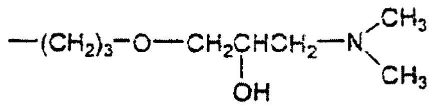 (xi)

;

$R^8$ eine Gruppe ist, die durch irgendeine der obigen Formel (vii) bis (xi) dargestellt wird;
p eine ganze Zahl von 2 bis 4.000 ist; und
q eine ganze Zahl von 2 bis 150 ist.

**3.** Verfahren gemäß Anspruch 1 oder 2, worin die modifizierte Organopolysiloxanlösung in Schritt (b) dehydratisiert wird, bis eine Wasserkonzentration der modifizierten Organopolysiloxanlösung auf 100 mg/kg oder weniger reduziert ist.

**4.** Verfahren gemäß irgendeinem der Ansprüche 1 bis 3, worin eine Konzentration des modifizierten Organopolysiloxans in der in Schritt (b) erhaltenen Lösung des modifizierten Organopolysiloxans 10 bis 70 Massen% ist.

**5.** Verfahren gemäß irgendeinem der Ansprüche 1 bis 4, worin die Lösung des modifizierten Organopolysiloxans in Schritt (b) bei 40°C oder weniger dehydratisiert wird.

**6.** Verfahren gemäß irgendeinem der Ansprüche 1 bis 5, worin die Lösung des modifizierten Organopolysiloxans in Schritt (b) durch den Einsatz eines Molekularsiebs dehydratisiert wird.

**7.** Verfahren gemäß irgendeinem der Ansprüche 1 bis 6, worin die Lösung des Endgruppen-reaktiven Poly(N-acylalkylenimins) vor Schritt (c) auf 70°C oder weniger abgekühlt wird.

**8.** Verfahren gemäß irgendeinem der Ansprüche 1 bis 7, worin die Ringöffungspolymerisation in Schritt (a) nach dem Dehydratisieren der Lösung der cyclischen Iminoetherverbindung durchgeführt wird.

**9.** Verfahren gemäß irgendeinem der Ansprüche 1 bis 8, worin die Ringöffnungspolymerisation in Schritt (a) nach dem Dehydratisieren der Lösung der cyclischen Iminoetherverbindung bis zu einer Wasserkonzentration von 10 bis 600 mg/kg durchgeführt wird.

**10.** Verfahren gemäß irgendeinem der Ansprüche 1 bis 9, worin das Lösungsmittel in Schritt (a) ein (C1 bis 3)-Alkylacetat ist.

**11.** Verfahren gemäß irgendeinem der Ansprüche 1 bis 10, worin die Lösung des modifizierten Organopolysiloxans in Schritt (b) dehydratisiert wird, bis eine Wasserkonzentration von 3 bis 100 mg/kg erreicht wird.

**12.** Verfahren gemäß irgendeinem der Ansprüche 1 bis 11, worin das Lösungsmittel in Schritt (b) ein (C1 bis 3)-Alkylacetat ist.

**13.** Verfahren gemäß irgendeinem der Ansprüche 1 bis 12, worin die Wasserkonzentration der gemischten Lösung, die in Schritt (c) nach dem Mischen der Lösung des Endgruppen-reaktiven Poly(N-acylalkylenimins) und der Lösung des modifizierten Organopolysiloxans und dem Ermöglichen der Reaktion des Endgruppen-reaktiven Poly(N-acylalkylenimins) und des modifizierten Organopolysiloxans 0 bis 150 mg/kg oder weniger ist.

**14.** Verfahren gemäß Anspruch 1, worin jedes $R^1$ in den Formeln (1) und (I) eine lineare oder verzweigte Alkylgruppe mit 1 bis 3 Kohlenstoffatomen ist.

**15.** Verfahren gemäß Anspruch 2, worin $R^2$ in der Formel (II) eine lineare oder verzweigte Alkylgruppe mit 1 bis 3 Kohlenstoffatomen ist.

**16.** Verfahren gemäß Anspruch 2, worin jedes der $R^6$ und $R^7$ in der Formel (II) unabhängig eine lineare oder verzweigte Alkylgruppe mit 1 bis 3 Kohlenstoffatomen oder eine Gruppe, die durch irgendeine der Formeln (vii) bis (xi) dargestellt wird, ist.

## Revendications

1. Procédé de production d'un composé organopolysiloxane dans lequel un segment poly(N-acylalkylèneimine) comprenant des motifs de répétition représentés par la formule (1) :

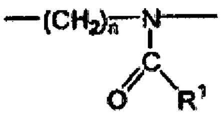

(1)

dans laquelle $R^1$ est un atome d'hydrogène, un groupe alkyle ayant de 1 à 22 atomes de carbone, un groupe aralkyle, ou un groupe aryle, et n vaut 2 ou 3,
est lié à une extrémité terminale et/ou une chaîne latérale d'un segment d'organopolysiloxane,
le procédé comprenant :

une étape (a) de soumission d'un composé imino-éther cyclique représenté par la formule (I) :

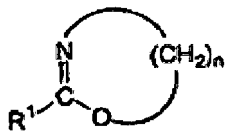

(I)

dans laquelle $R^1$ et n sont tels que définis ci-dessus en ce qui concerne $R^1$ et n de la formule (1),
à une polymérisation par ouverture de cycle dans une solution de celui-ci qui est obtenue en mélangeant le composé imino-éther cyclique et un solvant, de façon à préparer une solution d'un poly(N-acylalkylèneimine) réactif au niveau terminal ;

une étape (b) de déshydratation d'une solution qui est obtenue par mélange d'un organopolysiloxane modifié ayant un groupe amino au niveau d'une extrémité terminale et/ou d'une chaîne latérale de sa chaîne moléculaire, et d'un solvant, de telle sorte qu'une concentration en eau d'une solution mixte à obtenir par le mélange de la solution du poly(N-acylalkylèneimine) réactif au niveau terminal obtenue à l'étape (a) et de la solution résultante de l'organopolysiloxane modifié est régulée pour être de 150 mg/kg ou moins ; et
une étape (c) de mélange de la solution de l'organopolysiloxane modifié obtenu à l'étape (b) et de la solution du poly(N-acylalkylèneimine) réactif au niveau terminal obtenue à l'étape (a) et laisser réagir l'organopolysiloxane modifié et le poly(N-acylalkylèneimine) réactif au niveau terminal.

2. Procédé selon la revendication 1, dans lequel l'organopolysiloxane modifié est représenté par la formule (II) :

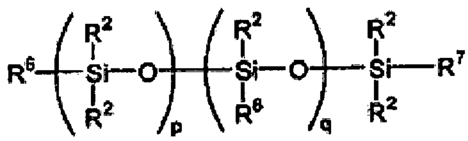

(II)

dans laquelle chacun des $R^2$ est indépendamment un groupe alkyle ayant 1 à 22 atomes de carbone ou un groupe phényle ;
chacun de $R^6$ et $R^7$ est indépendamment un groupe alkyle ayant 1 à 22 atomes de carbone, un groupe phényle, ou un groupe représenté par l'une quelconque des formules (vii) à (xi) suivantes :

$-(CH_2)_3-NH_2$ (vii) $-(CH_2)_3-NH-(CH_2)_2-NH_2$ (viii)

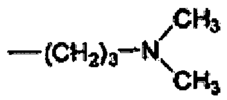 (ix)

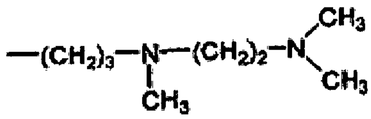 (x)

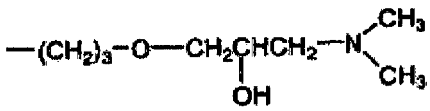 (xi)

;

$R^8$ est un groupe représenté par l'une quelconque des formules (vii) à (xi) ci-dessus ;
p est un nombre entier de 2 à 4 000 ; et
q est un nombre entier de 2 à 150.

**3.** Procédé selon la revendication 1 ou 2, dans lequel la solution d'organopolysiloxane modifié est déshydratée à l'étape (b) jusqu'à ce qu'une concentration en eau de la solution d'organopolysiloxane modifié soit réduite à 100 mg/kg ou moins.

**4.** Procédé selon l'une quelconque des revendications 1 à 3, dans lequel une concentration de l'organopolysiloxane modifié dans la solution d'organopolysiloxane modifié obtenue à l'étape (b) est de 10 à 70 % en masse.

**5.** Procédé selon l'une quelconque des revendications 1 à 4, dans lequel la solution d'organopolysiloxane modifié est déshydratée à l'étape (b) à 40°C ou moins.

**6.** Procédé selon l'une quelconque des revendications 1 à 5, dans lequel la solution d'polyorganosiloxane modifié est déshydratée à l'étape (b) en utilisant un tamis moléculaire.

**7.** Procédé selon l'une quelconque des revendications 1 à 6, dans lequel la solution de poly(N-acylalkylèneimine) réactif au niveau terminal est refroidie à 70°C ou moins avant l'étape (c).

**8.** Procédé selon l'une quelconque des revendications 1 à 7, dans lequel la polymérisation par ouverture de cycle est effectuée à l'étape (a) après déshydratation de la solution de composé imino-éther cyclique.

**9.** Procédé selon l'une quelconque des revendications 1 à 8, dans lequel la polymérisation par ouverture de cycle est réalisée à l'étape (a) après déshydratation de la solution du composé imino-éther cyclique à une concentration en eau de 10 à 600 mg/kg.

**10.** Procédé selon l'une quelconque des revendications 1 à 9, dans lequel le solvant à l'étape (a) est un acétate d'alkyle en (C1 à 3).

**11.** Procédé selon l'une quelconque des revendications 1 à 10, dans lequel la solution d'organopolysiloxane modifié est déshydratée à l'étape (b) jusqu'à ce qu'une concentration en eau atteigne 3 à 100 mg/kg.

**12.** Procédé selon l'une quelconque des revendications 1 à 11, dans lequel le solvant à l'étape (b) est un acétate d'alkyle en (C1 à 3).

**13.** Procédé selon l'une quelconque des revendications 1 à 12, dans lequel la concentration en eau de la solution réactionnelle mixte qui est obtenue à l'étape (c) après le mélange de la solution de poly(N-acylalkylèneimine) réactif au niveau terminal et de la solution d'organopolysiloxane modifié et laisser le poly(N-acylalkylèneimine) réactif au niveau terminal et l'organopolysiloxane modifié réagir est de 0 à 150 mg/kg ou moins.

**14.** Procédé selon la revendication 1, dans lequel chaque $R^1$ dans les formules (1) et (I) est un groupe alkyle linéaire ou ramifié ayant 1 à 3 atomes de carbone.

**15.** Procédé selon la revendication 2, dans lequel $R^2$ dans la formule (II) est un groupe alkyle linéaire ou ramifié ayant 1 à 3 atomes de carbone.

**16.** Procédé selon la revendication 2, dans lequel chacun de $R^6$ et $R^7$ dans la formule (II) est indépendamment un groupe alkyle linéaire ou ramifié ayant 1 à 3 atomes de carbone ou un groupe représenté par l'une quelconque des formules (vii) à (xi).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2276824 A
- JP 2009024114 B
- EP 0863172 A
- US 5747016 A
- JP 2009024114 A
- JP 10279690 A